# FASCICULE DE BREVET EUROPEEN

(11) **EP 3 329 138 B1**
(45) Date de publication et mention de la délivrance du brevet: **01.05.2019**
(21) Numéro de dépôt: 16750982.7
(22) Date de dépôt: 22.07.2016
(51) Int. Cl.: F16D 3/84

(54) **SOUFFLET DE PROTECTION POUR JOINT DE TRANSMISSION ET ENSEMBLE DE TRANSMISSION CORRESPONDANT**
FALTENBALG FÜR ANTRIEBSGELENK UND ZUGEHÖRIGE GETRIEBEANORDNUNG
DUST BOOT FOR TRANSMISSION JOINT AND CORRESPONDING TRANSMISSION ASSEMBLY

(30) Priorité: 27.07.2015 FR 1557120
(43) Date de publication de la demande: 06.06.2018
(73) Titulaire: Trelleborg Boots France, 44470 Carquefou (FR)
(72) Inventeur: HOUIS, Jacques, 44470 Thouare sur Loire (FR); BOUHOUR, Jean-Luc, 44690 La Haye Fouassiere (FR); MAITAY, Frédéric, 44440 Riaille (FR)
(74) Mandataire: Godineau, Valérie
(86) Numéro de dépôt international: PCT/FR2016/051919
(87) Numéro de publication internationale: WO 2017/017362

(56) Documents cités:
- EP-A1- 0 791 150
- US-A- 5 765 837
- US-A1- 2010 120 546

## Description

### DOMAINE DE L'INVENTION

La présente invention concerne de manière générale les soufflets de protection pour joints de transmission, ainsi que les ensembles de transmission correspondants.

### ART ANTERIEUR

L'invention concerne plus particulièrement un soufflet de protection pour joint de transmission articulé, ledit joint de transmission articulé comprenant un boîtier, appelé bol, qui présente une extrémité ouverte, une extrémité opposée destinée à être solidarisée à un premier arbre, un deuxième arbre et des moyens de roulement montés sur une extrémité du deuxième arbre. Lesdits moyens de roulement comprennent des éléments de roulement logés dans une cage et ladite extrémité du deuxième arbre est logée avec les moyens de roulement dans le bol. Ledit soufflet de protection présente deux extrémités ouvertes dont une est destinée à être montée sur l'extrémité ouverte du bol.

On connaît un tel soufflet de l'état de la technique et notamment du document de brevet publié sous le numéro EP0791150. Dans ce document EP0791150, le premier arbre est un arbre d'entrée, le deuxième arbre est un arbre de sortie et lesdits moyens de roulement sont des moyens de roulement à billes.

Le soufflet décrit dans le document EP0791150 présente une nervure périphérique radiale interne qui s'étend en regard des moyens de roulement.

Ainsi, lorsque l'ensemble de transmission est manipulé, notamment pour son montage dans un véhicule automobile ou son démontage, un éventuel déplacement axial de l'arbre de sortie dans le sens d'une sortie du bol est arrêté par la venue en butée des billes desdits moyens de roulement contre ladite nervure périphérique radiale interne du soufflet.

Cependant, il arrive encore que l'arbre de sortie sorte du bol lorsque l'arbre de sortie est manipulé et déplacé suivant une direction inclinée par rapport à l'axe de l'ouverture du bol.

La présente invention a pour but de proposer un nouveau soufflet et un nouvel ensemble de transmission correspondant permettant de palier à tout ou partie des problèmes exposés ci-dessus.

### RESUME DE L'INVENTION

A cet effet, l'invention a pour objet un soufflet de protection pour joint de transmission articulé, ledit joint de transmission articulé comprenant :
- un boîtier, appelé bol, qui présente une extrémité ouverte, et une extrémité opposée destinée à être solidarisée à un premier arbre ;
- un deuxième arbre et des moyens de roulement montés sur une extrémité du deuxième arbre, lesdits moyens de roulement comprenant des éléments de roulement logés dans une cage, et ladite extrémité du deuxième arbre étant logée avec les moyens de roulement dans le bol ;
ledit soufflet de protection présentant deux extrémités ouvertes dont une destinée à être montée sur l'extrémité ouverte du bol,
caractérisé en ce que ledit soufflet comprend :
- une gorge périphérique radiale interne, appelée gorge d'arrêt, formant un siège apte à recevoir au moins une partie des éléments de roulement desdits moyens de roulement lors d'un déplacement incliné, de préférence dans la plage ]0°, 18°] du deuxième arbre par rapport à l'axe de l'ouverture du bol, dans le sens d'une sortie du bol ;
- un épaulement radial interne, appelé épaulement d'arrêt de cage, formant une butée apte à retenir la cage des moyens de roulement lors dudit déplacement du deuxième arbre, ledit épaulement étant séparé de la gorge par une paroi périphérique qui définit avec l'épaulement un logement apte à recevoir une partie de la cage des moyens de roulement lorsque ladite cage est en butée contre l'épaulement.

Grâce à une telle conception du soufflet, ledit soufflet s'oppose à un désengagement de l'arbre de transmission par rapport au bol, non seulement lorsque l'arbre est soumis à un déplacement axial, mais aussi lorsque l'arbre est déplacé en étant incliné par rapport à l'axe du bol.

Selon un aspect particulier, ledit soufflet retient ainsi l'arbre par la cage et les éléments de roulement quel que soit l'angle d'inclinaison de l'axe du deuxième arbre compris dans la plage ]0°, 18°], et de préférence quel que soit l'angle d'inclinaison compris dans la plage ]0°, 30°], par rapport à l'axe de l'ouverture du bol.

En effet, lors de l'inclinaison de l'arbre muni des moyens de roulement et de son déplacement dans le sens d'une sortie du bol, la cage des moyens de roulement vient buter contre l'épaulement radial interne de manière combinée avec au moins une partie des éléments de roulement qui viennent en butée dans la gorge radiale interne.

Ainsi l'effort exercé sur l'arbre lors de sa manipulation est repris non seulement au niveau de la gorge par contact d'une partie de la surface extérieure d'au moins une partie des éléments de roulement avec la surface de contact de la gorge, mais aussi au niveau de l'épaulement par contact de la cage avec l'épaulement.

Une telle conception du soufflet permet de répartir sur la gorge et l'épaulement du soufflet, l'effort auquel est soumis l'arbre emboité dans le bol lors d'un déplacement dudit arbre dans le sens d'une sortie du bol et en particulier lors d'une inclinaison dudit arbre par rapport à l'axe de l'ouverture du bol.

Selon une caractéristique avantageuse de l'invention, l'épaulement d'arrêt de cage est plus proche de l'axe du soufflet que ne l'est la gorge d'arrêt.

Autrement dit, le rayon pris entre l'axe du soufflet et le point de la gorge le plus proche de l'axe du soufflet est supérieur au rayon pris entre l'axe du soufflet et le point de l'épaulement le plus proche de l'axe du soufflet.

Selon une caractéristique avantageuse de l'invention, l'épaulement est formé par une paroi périphérique interne sensiblement radiale.

Ainsi, l'épaulement forme une paroi qui s'étend principalement orthogonalement à l'axe du soufflet, de manière à former une butée d'arrêt franche vis-à-vis de la cage des moyens de roulement.

Selon une caractéristique avantageuse de l'invention, la gorge d'arrêt présente un profil concave, de concavité orientée vers l'axe et l'embouchure de l'extrémité du soufflet destinée à coiffer le bol.

Ledit profil est pris en vue de coupe du soufflet selon un plan axial. Le profil de la gorge d'arrêt peut aussi être défini comme la génératrice de ladite gorge.

Avantageusement, ledit profil de la gorge est en arc de cercle, de préférence en quart de cercle.

Selon une caractéristique avantageuse de l'invention, ladite paroi périphérique qui sépare l'épaulement de la gorge s'étend selon une direction principalement parallèle à l'axe du soufflet.

Selon une caractéristique avantageuse de l'invention, l'épaulement est formé par moulage avec la gorge et l'extrémité du soufflet destinée à être fixée sur le bol.

Grâce à une telle conception, l'épaisseur de la gorge d'arrêt et de l'épaulement d'arrêt peuvent être précisément maitrisées et adaptées pour leur conférer une rigidité suffisante et supérieure à celle des plis du soufflet.

Selon une caractéristique avantageuse de l'invention, en coupe axiale du soufflet, le point de l'épaulement le plus proche de l'axe du soufflet, appelé point bas de l'épaulement, est situé sensiblement dans l'alignement des points formés par la base de chaque spire du soufflet, le point de la gorge d'arrêt le plus proche de l'axe du soufflet étant écarté de cet alignement.

Selon une caractéristique avantageuse de l'invention, la gorge est formée par les lignes de sommet de nervures ménagées sur le pourtour intérieur du soufflet et circonférentiellement séparées les unes des autres.

L'invention concerne aussi un ensemble de transmission, notamment pour transmission de véhicule automobile, qui comprend :
- un boîtier, appelé bol, qui présente une extrémité ouverte, et une extrémité opposée destinée à être solidarisée à un premier arbre ;
- un deuxième arbre et des moyens de roulement montés sur une extrémité du deuxième arbre, lesdits moyens de roulement comprenant des éléments de roulement logés dans une cage, et ladite extrémité du deuxième arbre étant logée avec les moyens de roulement dans le bol ;
ledit ensemble de transmission comprenant aussi un soufflet de protection traversé par le deuxième arbre, et dont une extrémité est montée sur l'extrémité ouverte du bol, caractérisé en ce que ledit soufflet de protection est tel que décrit ci-dessus.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue en coupe longitudinale d'un ensemble de transmission comprenant un premier arbre fixé à un bol et un deuxième arbre dont une extrémité est couplée à l'intérieur du bol à l'aide de moyens de roulement, un soufflet de protection étant monté sur le deuxième arbre et sur le bol, conformément à un mode de réalisation de l'invention;

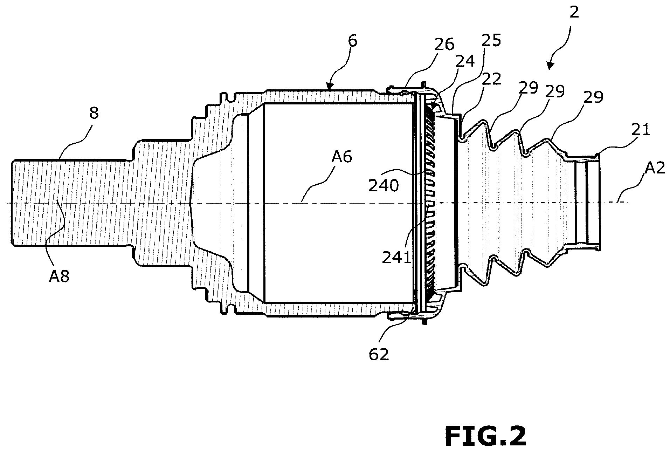

- la figure 2 est une vue de la figure 1 dans laquelle le deuxième arbre et les moyens de roulement correspondants n'ont pas été représenté pour une meilleure visibilité de la gorge d'arrêt et de l'épaulement d'arrêt de cage du soufflet ;

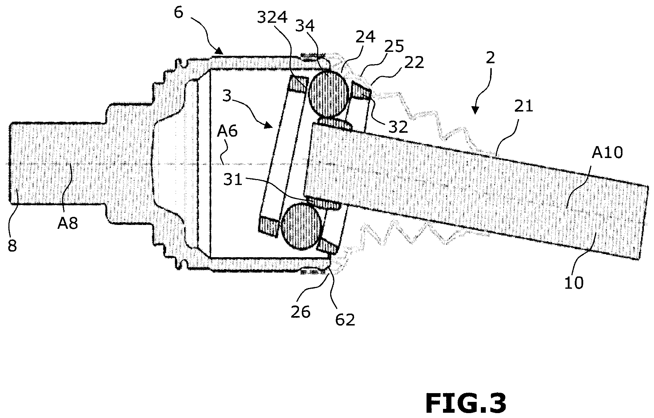

- la figure 3 est une vue en coupe longitudinale de l'ensemble de transmission de la figure 1, à l'état déplacé du deuxième arbre dans le sens d'une sortie du bol tout en étant incliné par rapport à l'axe du bol.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments de l'ensemble de transmission peuvent être exagérées à des fins de clarté.

Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes.

Les modes de réalisation qui suivent sont examinés, par souci de simplification, en relation avec la terminologie et la structure d'un ensemble de transmission pour véhicule automobile.

Une référence dans toute la description à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la description ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

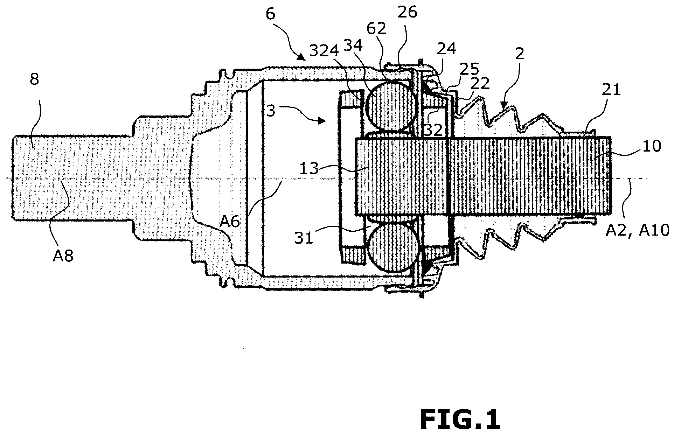

La figure 1 montre sous une forme schématique un joint articulé d'un ensemble de transmission, de préférence pour un véhicule à moteur, selon un mode de réalisation. Le joint comprend un boîtier en forme de bol 6 qui est relié à un arbre d'entrée 8 de sorte que le boîtier 6 tourne avec l'arbre d'entrée 8.

Le bol 6 présente une extrémité 62 ouverte qui définit une embouchure d'axe A6. L'arbre d'entrée 8 présente un axe A8 parallèle, de préférence confondu avec l'axe A6 du bol 6.

Le joint comprend aussi un arbre 10 de sortie relié par exemple à l'une des roues motrices du véhicule. L'arbre 10 est rigide et présente une extrémité 13 équipée de moyens de roulement 3. Ladite extrémité 13 du deuxième arbre 10 est logée avec les moyens de roulement 3 dans le bol 6 de sorte que les moyens de roulement 3 permettent une articulation entre le bol 6 et le deuxième arbre 10, ainsi qu'un entrainement en rotation de l'arbre de sortie 10 par l'arbre 8 d'entrée.

Lesdits moyens de roulement 3 comprennent un élément annulaire 31, appelé noix, fixé sur l'extrémité de l'arbre 10 de sortie engagée dans le bol.

La noix 31 supporte plusieurs éléments de roulement 34 qui s'engagent chacun dans une rainure (non représentée) ménagée sur la surface extérieure de la noix. Dans le mode de réalisation illustré aux figures, lesdits éléments de roulement 34 sont des billes

Les éléments de roulement peuvent aussi être engagés au niveau de leur partie extérieure c'est-à-dire leur portion orientée vers le bol, dans une rainure radiale (non représentée) ménagée sur la surface intérieure du bol.

Les éléments de roulement 34 sont en outre logés dans une cage 32 qui permet de maintenir les éléments de roulement espacés les uns des autres. La cage 32 se présente sous la forme d'un corps annulaire qui s'étend autour et à écartement de la noix 31. Ce corps annulaire présente des ouvertures 324 réparties circonférentiellement et à travers lesquelles s'étendent les éléments de roulement pour permettre aux éléments de roulement de venir en contact avec la noix 31 et en contact avec l'intérieur du bol 6.

Par conséquent, lorsque le bol 6 est entraîné en rotation par l'arbre d'entrée 8, ce mouvement de rotation est transmis à l'arbre de sortie 10 par l'intermédiaire des éléments de roulement 34.

D'une manière connue, le fait de prévoir des éléments de roulement 34 permet un mouvement angulaire entre l'axe A10 de l'arbre de sortie 10 et l'axe A8 de l'arbre d'entrée 8, acceptant ainsi un mouvement correspondant de la roue.

Afin de protéger le mécanisme du joint des effets de l'humidité et de la poussière et d'une autre 10 contamination, un soufflet de protection 2 est prévu. Ce soufflet de protection 2 est avantageusement fabriqué par moulage et par soufflage à partir d'une matière thermoplastique comme détaillé ci-après.

Ce soufflet de protection 2 se présente sous la forme d'un corps creux allongé apte à être traversé par l'arbre 10. Ce corps creux comporte une extrémité 26 positionnable par emboitement à recouvrement de l'extrémité ouverte 62 du bol 6 et une extrémité opposée solidarisable audit arbre 10. Avantageusement, le soufflet est en matière de synthèse. Dans l'exemple illustré aux figures, l'extrémité 26 du soufflet 2 est de plus grand diamètre que l'extrémité opposée 21.

Le soufflet comprend plusieurs spires 29 individuelles qui s'étendent de préférence d'un seul tenant entre les deux extrémités 26, 21 du soufflet 2. Avantageusement, l'extrémité du soufflet 26 est fixée sur l'extrémité 62 correspondante du bol 6 à l'aide d'un collier de fixation.

Selon un aspect particulier, l'extrémité 21 du soufflet, est serrée autour de l'arbre 10 par un collier de fixation. En plus du mouvement angulaire permis par le joint, un petit mouvement limité de l'arbre 10 dans une direction axiale par rapport au bol 6 est prévu.

En particulier, le bol 6 comprend des chemins de roulement axiaux (non représentés) répartis sur la surface périphérique interne du bol, et, comme évoqué ci-dessus, un chemin de roulement radial (non représenté) situé sur la surface périphérique interne du bol à proximité de l'extrémité ouverte du bol.

Ledit soufflet 2 de protection comprend, entre ses extrémités 26, 21 et du côté de l'extrémité 26 du soufflet 2 qui coiffe le bol 6, une gorge périphérique radiale interne, appelée gorge 24 d'arrêt, et un épaulement radial interne, appelé épaulement 22 d'arrêt de cage.

La gorge 24 d'arrêt s'étend sur le pourtour intérieur du soufflet. La gorge 24 d'arrêt forme une butée vis-à-vis d'au moins une partie des éléments de roulement 34 desdits moyens de roulement 3 lors d'un déplacement du deuxième arbre 10 dans le sens d'une sortie du bol 6 par l'ouverture 62 et selon une direction inclinée par rapport à l'axe A6 de l'ouverture du bol 6. Ladite direction inclinée est une direction qui forme avec l'axe A6 du bol, ou encore l'axe A8 de l'arbre 8, un angle compris dans la plage ]0° ;18°], ou encore un angle compris entre ]0° ; 30°].

L'épaulement 22 d'arrêt de cage est écarté axialement de la gorge d'arrêt 24 en direction de l'extrémité 21 du soufflet. Autrement dit, l'épaulement 22 d'arrêt de cage s'étend entre la gorge 24 et les spires 29 du soufflet. L'épaulement 22 d'arrêt de cage forme une butée vis-à-vis de la cage 32 des moyens de roulement 3.

L'épaulement 22 d'arrêt de cage est plus proche de l'axe A2 du soufflet 2 que ne l'est la gorge 24 d'arrêt.

En outre, en coupe axiale du soufflet, le point de l'épaulement 22 le plus proche de l'axe du soufflet, appelé point bas de l'épaulement, est situé sensiblement dans l'alignement des points formés par la base de chaque spire 29 du soufflet. Le point de la gorge d'arrêt 24 le plus proche de l'axe du soufflet est écarté de cet alignement. L'écartement de cet alignement est en outre dans le sens d'un éloignement de l'axe du soufflet. Le point de la gorge 24 d'arrêt le plus proche de l'axe A2 du soufflet 2 forme le point de liaison entre la gorge 24 et la paroi périphérique 25 axiale.

A l'état coaxial, du bol 6, du soufflet 2 et de l'arbre 10, le point bas de l'épaulement 22 est plus proche desdits axes A2, A6, A10 que ne l'est la surface intérieure de la cage 32 annulaire.

Les parties 22, 24, 25 du soufflet sont rigides, par rapport aux spires, et s'étendent d'un seul tenant. En particulier, l'épaulement 22 est formé par moulage avec la gorge 24 et l'extrémité 26 du soufflet destinée à être fixée sur le bol. La paroi périphérique 25 est aussi formée par moulage avec les parties 22, 24, 26.

La partie du soufflet 2 comprise entre l'épaulement 22 et l'extrémité 21 du soufflet montée sur l'arbre 10 est obtenue par soufflage.

Les parties 22, 24, 25 du soufflet forment ainsi une barrière périphérique interne en regard de l'embouchure ouverte du bol 6, qui empêche de manière positive le déboîtement des éléments de roulement 34 et de la cage 32 hors de cette embouchure lors d'un déplacement de l'arbre 10 selon une direction inclinée par rapport à l'axe A6 du bol 6.

Dans le mode de réalisation illustré aux figures, la gorge 24 est formée par les lignes de sommet de nervures 240 ménagées sur le pourtour intérieur du soufflet et circonférentiellement séparées les unes des autres.

Autrement dit, la face de contact de la gorge avec les éléments de roulement présente des évidements 241 qui permettent de réduire le poids du soufflet et de favoriser la ventilation entre les éléments de roulement 34 et la gorge 24 lors de leur venue en contact.

L'espacement entre les nervures 240 est inférieur au diamètre ou à la section et la taille des éléments de roulement 34. On peut prévoir que les nervures 240 soient renforcées par une paroi s'étendant radialement et circonférentiellement, c'est-à-dire transversalement aux nervures 240.

## Revendications

1. Soufflet (2) de protection pour joint de transmission articulé, ledit joint de transmission articulé comprenant :
- un boîtier, appelé bol (6), qui présente une extrémité ouverte (62), et une extrémité opposée destinée à être solidarisée à un premier arbre (8);
- un deuxième arbre (10) et des moyens de roulement (3) montés sur une extrémité (13) du deuxième arbre (10), lesdits moyens de roulement (3) comprenant des éléments de roulement (34) logés dans une cage (32), et ladite extrémité (13) du deuxième arbre étant logée avec les moyens de roulement (3) dans le bol (6) ;
ledit soufflet (2) de protection présentant deux extrémités ouvertes (26, 21) dont une (26) destinée à être montée sur l'extrémité ouverte (62) du bol (6):
- une gorge périphérique radiale interne, appelée gorge (24) d'arrêt, formant un siège apte à recevoir au moins une partie des éléments de roulement (34) desdits moyens de roulement (3) lors d'un déplacement incliné, de préférence dans la plage ]0°, 18°], du deuxième arbre (10) par rapport à l'axe (A6) de l'ouverture du bol (6), dans le sens d'une sortie du bol (6);
**caractérisé en ce que** ledit soufflet (2) comprend:
- un épaulement radial interne, appelé épaulement (22) d'arrêt de cage, formant une butée apte à retenir la cage (32) des moyens de roulement (3) lors dudit déplacement du deuxième arbre (10), ledit épaulement (22) étant séparé de la gorge (24) par une paroi périphérique (25) qui définit avec l'épaulement (22) un logement apte à recevoir une partie de la cage (32) des moyens de roulement (3) lorsque ladite cage (32) est en butée contre l'épaulement (22).

2. Soufflet (2) selon la revendication 1, **caractérisé en ce que** l'épaulement (22) d'arrêt de cage est plus proche de l'axe (A2) du soufflet (2) que ne l'est la gorge (24) d'arrêt.

3. Soufflet (2) selon l'une des revendications précédentes, **caractérisé en ce que** l'épaulement (22) est formé par une paroi périphérique interne sensiblement radiale.

4. Soufflet (2) selon l'une des revendications précédentes, **caractérisé en ce que** la gorge d'arrêt (24) présente un profil concave, de concavité orientée vers l'axe (A2) et l'embouchure de l'extrémité (26) du soufflet (2) destinée à coiffer le bol (6).

5. Soufflet (2) selon l'une des revendications précédentes, **caractérisé en ce que** la gorge d'arrêt (24) présente un profil en arc de cercle, de préférence en quart de cercle.

6. Soufflet (2) selon l'une des revendications précédentes, **caractérisé en ce que** ladite paroi périphérique (25) qui sépare l'épaulement (22) de la gorge (24) s'étend selon une direction principalement parallèle à l'axe (A2) du soufflet (2).

7. Soufflet (2) selon l'une des revendications précédentes, **caractérisé en ce que** l'épaulement (22) est formé par moulage avec la gorge (24) et l'extrémité (26) du soufflet (2) destinée à être montée sur le bol (6).

8. Soufflet (2) selon l'une des revendications précédentes, **caractérisé en ce que**, en coupe axiale du soufflet (2), le point de l'épaulement (22) le plus proche de l'axe (A2) du soufflet, appelé point bas de l'épaulement, est situé sensiblement dans l'alignement des points formés par la base de chaque spire (29) du soufflet (2), le point de la gorge d'arrêt (24) le plus proche de l'axe (A2) du soufflet étant écarté de cet alignement.

9. Soufflet (2) selon l'une des revendications précédentes, **caractérisé en ce que** la gorge (24) est formée par les lignes de sommet de nervures (240) ménagées sur le pourtour intérieur du soufflet et circonférentiellement séparées les unes des autres.

10. Ensemble de transmission, notamment pour transmission de véhicule automobile, qui comprend :
- un boîtier (6), appelé bol, qui présente une extrémité ouverte (62), et une extrémité opposée destinée à être solidarisée à un premier arbre (8);
- un deuxième arbre (10) et des moyens de roulement (3) montés sur une extrémité (13) du deuxième arbre (10), lesdits moyens de roulement (3) comprenant des éléments de roulement (34) logés dans une cage (32), et ladite extrémité (13) du deuxième arbre étant logée avec les moyens de roulement (3) dans le bol (6) ;
ledit ensemble de transmission comprenant aussi un soufflet (2) de protection traversé par le deuxième arbre (10), et dont une extrémité (26) est montée sur l'extrémité ouverte (62) du bol (6), **caractérisé en ce que** ledit soufflet (2) de protection est conforme à l'une des revendications précédentes.

## Patentansprüche

1. Schutzbalg (2) für Antriebsgelenk, wobei das Antriebsgelenk umfasst:
- ein Gehäuse, bezeichnet als Schale (6), ein offenes Ende (62) und ein entgegengesetztes Ende aufweisend, das bestimmt ist, mit einer ersten Welle (8) fest verbunden zu sein,
- eine zweite Welle (10) und Rollmittel (3), die auf einem Ende (13) der zweiten Welle (10) angebracht sind, wobei die Rollmittel (3) Rollelemente (34) umfassen, die in einem Käfig (32) untergebracht sind, und das Ende (13) der zweiten Welle mit den Rollmitteln (3) in der Schale (6) untergebracht ist,
wobei der Schutzbalg (2) zwei offene Enden (26, 21) aufweist, von dem eins (26) bestimmt ist, auf dem offenen Ende (62) der Schale (6) angebracht zu sein,
- eine innere radiale periphere Nut, bezeichnet als Haltenut (24), einen Sitz bildend, der imstande ist, mindestens einen Teil der Rollelemente (34) der Rollmittel (3) bei einer geneigten Verlagerung, vorzugsweise in dem Bereich ]0°, 18°] der zweiten Welle (10) in Bezug auf die Achse (A6) der Öffnung der Schale (6) in Richtung eines Ausgangs der Schale (6) aufzunehmen,
**dadurch gekennzeichnet, dass** der Balg (2) umfasst:
- einen inneren radialen Absatz, bezeichnet als Käfighalteabsatz (22), der einen Anschlag bildet, der imstande ist, den Käfig (32) der Rollmittel (3) bei der Verlagerung der zweiten Welle (10) zu halten, wobei der Absatz (22) von der Nut (24) durch eine periphere Wand (25) getrennt ist, die mit dem Absatz (22) eine Aufnahme definiert, die imstande ist, einen Teil des Käfigs (32) der Rollmittel (3) zu empfangen, wenn der Käfig (32) auf dem Absatz (22) in Anschlag ist.

2. Balg (2) nach Anspruch 1, **dadurch gekennzeichnet, dass** der Käfighalteabsatz (22) näher an der Achse (A2) des Balgs (2) als die Haltenut (24) ist.

3. Balg (2) nach einem der vorangehenden Ansprüche, **dadurch gekennzeichnet, dass** der Absatz (22) von einer etwa radialen inneren peripheren Wand gebildet ist.

4. Balg (2) nach einem der vorangehenden Ansprüche, **dadurch gekennzeichnet, dass** die Haltenut (24) ein konkaves Profil mit zur Achse (A2) und Mündung des Endes (26) des Balgs (2), die bestimmt ist, die Schale (6) abzudecken, zeigender Konkavität aufweist.

5. Balg (2) nach einem der vorangehenden Ansprüche, **dadurch gekennzeichnet, dass** die Haltenut (24) ein kreisbogenförmiges, vorzugsweise Viertelkreisprofil aufweist.

6. Balg (2) nach einem der vorangehenden Ansprüche, **dadurch gekennzeichnet, dass** sich die periphere Wand (25), welche den Absatz (22) von der Nut (24) trennt, gemäß einer Richtung erstreckt, die hauptsächlich parallel zur Achse (A2) des Balgs (2) ist.

7. Balg (2) nach einem der vorangehenden Ansprüche, **dadurch gekennzeichnet, dass** der Absatz (22) durch Formen mit der Nut (24) und dem Ende (26) des Balgs (2), das bestimmt ist, auf der Schale (6) angebracht zu sein, gebildet ist.

8. Balg (2) nach einem der vorangehenden Ansprüche, **dadurch gekennzeichnet, dass** sich im Axialschnitt des Balgs (2) der Punkt des Absatzes (22), welcher der Achse (A2) des Balgs am nächsten ist, bezeichnet als Tiefpunkt des Absatzes, etwa in der Flucht der Punkte befindet, die von der Basis jeder Windung (29) des Balgs (2) gebildet ist, wobei der der Achse (A2) des Balgs nächste Punkt der Haltenut (24) von dieser Flucht beabstandet ist.

9. Balg (2) nach einem der vorangehenden Ansprüche, **dadurch gekennzeichnet, dass** die Nut (24) von Spitzenlinienrillen (240) gebildet ist, die auf dem inneren Umfang des Balgs ausgebildet und umfänglich voneinander getrennt sind.

10. Übertragungseinheit, insbesondere für Kraftfahrzeugübertragung, die umfasst:
- ein Gehäuse, bezeichnet als Schale (6), ein offenes Ende (62) und ein entgegengesetztes Ende aufweisend, das bestimmt ist, mit einer ersten Welle (8) fest verbunden zu sein,
- eine zweite Welle (10) und Rollmittel (3), die auf einem Ende (13) der zweiten Welle (10) angebracht sind, wobei die Rollmittel (3) Rollelemente (34) umfassen, die in einem Käfig (32) untergebracht sind, und das Ende (13) der zweiten Welle mit den Rollmitteln (3) in der Schale (6) untergebracht ist,
wobei die Übertragungseinheit auch einen Schutzbalg (2) umfasst, der von der zweiten Welle (10) durchquert wird und von dem ein Ende (26) auf dem offenen Ende (62) der Schale (6) angebracht ist, **dadurch gekennzeichnet, dass** der Schutzbalg (2) nach einem der vorangehenden Ansprüche ist.

## Claims

1. A dust boot (2) for an articulated transmission joint, said articulated transmission joint comprising:
- a housing, called bowl (6), which has an open end (62), and an opposite end intended to be secured to a first shaft (8);
- a second shaft (10) and rolling means (3) mounted on one end (13) of the second shaft (10), said rolling means (3) comprising rolling elements (34) housed in a cage (32), and said end (13) of the second shaft being housed with the rolling means (3) in the bowl (6);
said dust boot (2) having two open ends (26, 21), including one (26) intended to be mounted on the open end (62) of the bowl (6),
- an inner radial peripheral groove, called stop groove (24), forming a seat able to receive at least part of the rolling elements (34) of said rolling means (3) during an inclined movement, preferably in the range ]0°, 18°], of the second shaft (10) relative to the axis (A6) of the opening of the bowl (6), in the direction of an outlet of the bowl (6);
**characterized in that** said boot (2) comprises:
- an inner radial shoulder, called cage stop shoulder (22), forming a stop able to retain the cage (32) of the rolling means (3) during said movement of the second shaft (10), said shoulder (22) being separated from the groove (24) by a peripheral wall (25) that defines, with the shoulder (22), a housing able to receive part of the cage (32) of the rolling means (3) when said cage (32) is abutting against the shoulder (22).

2. The boot (2) according to claim 1, **characterized in that** the cage stop shoulder (22) is closer to the axis (A2) of the boot (2) than the stop groove (24) is.

3. The boot (2) according to one of the preceding claims, **characterized in that** the shoulder (22) is formed by a substantially radial inner peripheral wall.

4. The boot (2) according to one of the preceding claims, **characterized in that** the stop groove (24) has a concave profile, with the concave side oriented toward the axis (A2) and the mouth of the end (26) of the boot (2) intended to cap the bowl (6).

5. The boot (2) according to one of the preceding claims, **characterized in that** the stop groove (24) has an arc of circle -shaped profile, preferably in a quarter-circle.

6. The boot (2) according to one of the preceding claims, **characterized in that** said peripheral wall (25) that separates the shoulder (22) from the groove (24) extends in a main direction parallel to the axis (A2) of the boot (2).

7. The boot (2) according to one of the preceding claims, **characterized in that** the shoulder (22) is formed by molding with the groove (24) and the end (26) of the boot (2) intended to be mounted on the bowl (6).

8. The boot (2) according to one of the preceding claims, **characterized in that**, in axial section of the boot (2), the tip of the shoulder (22) closest to the axis (A2) of the boot, called low point of the shoulder, is situated substantially in the alignment of the points formed by the base of each turn (29) of the boot (2), the point of the stop groove (24) closest to the axis (A2) of the boot being separated from said alignment.

9. The boot (2) according to one of the preceding claims, **characterized in that** the groove (24) is formed by the rib apex lines (240) arranged on the inner perimeter of the boot and circumferentially separated from one another.

10. A transmission assembly, in particular for a motor vehicle transmission, that comprises:
- a housing (6), called bowl, that has an open end (62), and an opposite end intended to be secured to a first shaft (8);
- a second shaft (10) and rolling means (3) mounted on one end (13) of the second shaft (10), said rolling means (3) comprising rolling elements (34) housed in a cage (32), and said end (13) of the second shaft being housed with the rolling means (3) in the bowl (6); said transmission assembly also comprising a dust boot (2) passed through by the second shaft (10), and one end (26) of which is mounted on the open end (62) of the bowl (6), **characterized in that** said dust boot (2) is according to one of the preceding claims.
